(19) 

**Europäisches Patentamt**
**European Patent Office**
**Office européen des brevets**

(11) **EP 1 795 502 A1**

(12) **EUROPEAN PATENT APPLICATION**

(43) Date of publication:
**13.06.2007 Bulletin 2007/24**

(51) Int Cl.:
*C01F 11/18* (2006.01)     *C09C 1/02* (2006.01)
*C08K 3/26* (2006.01)

(21) Application number: **05111943.6**

(22) Date of filing: **12.12.2005**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(71) Applicant: **SOLVAY (Société Anonyme)**
**1050 Bruxelles (BE)**

(72) Inventors:
• **Nover, Christoph**
**47497 Rheinberg (DE)**

• **Schinninger, Kurt**
**5400 Hallein (AT)**
• **Mattausch, Alfred**
**-- (AT)**

(74) Representative: **Jacques, Philippe et al**
**Solvay (Société Anonyme)**
**Intellectual Property Department**
**Rue de Ransbeek, 310**
**1120 Bruxelles (BE)**

(54) **Particles of precipitated calcium carbonate, process for making the particles and use of the particles as filler**

(57)     Particles of precipitated calcium carbonate with a rhombohedral crystal morphology exhibiting a low sodium content and a particle size distribution with a low cutoff value. Process for making such particles. Use of the particles as filler in polymer films.

EP 1 795 502 A1

**Description**

The invention relates to particles of precipitated calcium carbonate. More specifically, it relates to particles of precipitated calcium carbonate with a specific crystal morphology, a specific particle size distribution and a low metallic impurity content, to a process for preparing such particles and to their use as filler in various applications.

Depending on the application and on the effect sought, the requirements for the characteristics for calcium carbonate particles like for instance the crystal morphology, the particle size distribution or the metallic impurity content may be different. Generally, different products with different characteristics have to be produced for different applications. It is desirable to dispose of a single product which can be used in several different applications and which characteristics therefore fulfill the requirements of those various applications. The concomitant control of the calcium carbonate particle crystal morphology, particle size distribution or metal ion impurity content is not an easy task. Grinding and sieving of natural calcium carbonate for instance may give calcium carbonate particles with adequate particle size distribution and a required cutoff (no particle with a size higher than the cutoff value) but the impurities present in the starting material remain in the ground particles. Moreover grinding is a high energy consuming operation and sieving can lead to important loss of raw materials. EP patent 703193 describes the preparation of calcium carbonate with a rhombohedral crystal morphology and a particle size distribution exhibiting a low cutoff. This preparation involves a hydrothermal ageing step of a precipitated calcium carbonate in the presence of sodium hydroxide. However, the product obtained does not comply with all the above mentioned requirements.

It is the aim of the invention to provide a calcium carbonate exhibiting characteristics which have never been combined before, and which can be used as a filler in several applications.

The invention relates to particles of precipitated calcium carbonate having (a) a rhombohedral crystal morphology, (b) a particle size distribution measured by laser scattering such that at least 99.5 % by volume of the particles have an equivalent spherical diameter lower than or equal to 6 times the average equivalent spherical diameter ($D_{50}$), and (c) a sodium content lower than or equal to 500 ppm by weight.

The invention then relates to precipitated calcium carbonate particles with a rhombohedral crystal morphology, with a particle size distribution with a low cutoff value and with a low amount of metal ion impurities.

Several applications can be contemplated for such a product, as a filler : in polymers where the rhomboedral crystal morphology would lead to a decrease of the surface roughness and improve the gloss and the weatherability of polymers, in polymer thin films where the low-cutoff of the particle size distribution would lead to fewer film defects and weakness points during film stretching and rolling operations, in polymer ultra-thin films for electronics where the low cut-off value and the low sodium ion content would lead to strong thin films with good electrical insulation properties, in breathable polymer films where the precise dimensions of the particles would allow to control the permability of the film arising from subsequent treatment, in paints and printing inks where the rhomboedral crystal morphology combined with particle size distribution exhibiting a low cutoff would lead to optical effects such as gloss or orange peel and in coatings where the particle size distribution could give rise to the "self-cleaning effect".

By particles, one intends to denote crystallites or primary particles and clusters of primary particles. Crystallites or primary particles are defined as the smallest discrete particles that can be seen by Electron Microscopy analysis.

The calcium carbonate particles of the invention are substantially crystalline. Substantially crystalline is understood to mean that more than 50 % by weight, especially more than 75 % by weight, more particularly more than 90 % by weight of the calcium carbonate particles are in the form of crystalline material when analyzed by an X-ray diffraction technique. Crystalline calcium carbonate particles can consist of calcite or aragonite or a mixture of these two crystalline phases. The calcite content is usually higher than or equal to 30 % weight, preferably higher than or equal to 50 % and more preferably higher than or equal to 90 %, as measured by X-ray diffraction.

The calcium carbonate particles of the invention have a rhombohedral crystal morphology. By rhombohedral crystal morphology, one intends to denote that the majority of the crystallites or primary particles have the form of rhombohedrons. The shape of the crystallites can be obtained from Electron Microscopy analysis. Usually, more than 50 % by number of the crystallites have the form of rhombohedrons, preferably more than 75 %, more preferably more than 90 %, still more preferably more than 95 % and most preferably more than 99 %.

The crystallites of the calcium carbonate particles according to the invention have generally an aspect ratio lower than or equal to 5, preferably lower than or equal to 3 and most preferably lower than or equal to 1.5. The aspect ratio is higher than 1. The aspect ratio is defined by the ratio between the highest dimension and the smallest dimension of the crystallites (primary particles). This ratio is obtained from Scanning Electron Microscope photographs by averaging the two dimensions ratio measured on at least 10 crystallites for 1 photograph.

The calcium carbonate particles according in the invention have generally a BET specific surface area higher than or equal to 0.1 $m^2/g$, often higher than or equal to 1 $m^2/g$, frequently higher than or equal to 3 $m^2/g$ and specifically higher than or equal to 4 $m^2/g$. The calcium carbonate particles according to the invention have generally a BET specific surface area lower than or equal to 30 $m^2/g$ preferably lower than or equal to 25 $m^2/g$, more preferably lower than or equal to 20 $m^2/g$, and in particular lower than or equal to 15 $m^2/g$. The BET specific surface area is measured according to the standard ISO 9277-1995.

The calcium carbonate particles have commonly a mean primary particle size (dp) higher than or equal to 10 nm, often higher than or equal to 30 nm, frequently higher than or equal to 50 nm, specifically higher than or equal to 70 nm and more specifically higher than or equal to 100 nm. The mean primary particle size is generally lower than or equal to 20 $\mu$m, frequently lower than or equal to 10 $\mu$m, often lower than or equal to 1 $\mu$m and most often lower than or equal to 0.75 $\mu$m. The mean primary particle size is measured according to a method derived from standard NF X11-602 - 1974 (Blaine method) using the equation of Carman and Malherbe.

The size distribution of the precipitated calcium carbonate particles according to the invention is obtained from Laser Scattering Particle Size Distribution Analysis according to standard ISO 13320-1-1999.

The mean size of the particles (equal to the value of $D_{50}$ defined below) is commonly higher than or equal to 0.030 $\mu$m, often higher than or equal to 0.050 $\mu$m, frequently higher than or equal to 0.070 $\mu$m, specifically higher than or equal to 0.100 $\mu$m and most specifically higher than or equal to 0.150 $\mu$m. The mean size of the particles is generally lower than or equal to 20 $\mu$m, frequently lower than or equal to 10 $\mu$m, often lower than or equal to 5 $\mu$m, specifically lower than or equal to 3 $\mu$m and most specifically lower than or equal to 2 $\mu$m. $D_{50}$ is the particle size value which expresses that 50 % by vol of the particles have a size value lower than or equal to $D_{50}$.

The narrowness of the particle size distribution is measured by the SPAN value of the particle size distribution. The SPAN value is defined by the following equation:

$$SPAN = (D_{90}-D_{10})/D_{50}$$

where

$D_{90}$ is the particle size value which expresses that 90 % vol of the particles have a size value lower than or equal to $D_{90}$.
$D_{10}$ is the particle size value which expresses that 10 % vol of the particles have a size value lower than or equal to $D_{10}$.

The SPAN value of the particle size distribution of the particles of the invention is usually lower than or equal to 3.5, preferably lower than or equal to 2.5 and most preferably lower than or equal to 1. The SPAN value is generally higher than or equal to 0.05.

The cutoff value of the particle size distribution is the particle size value which expresses that 99.5 % vol of the particles have a size value lower than or equal to the cutoff value, preferably 99.9 % vol and most preferably 99.99 % vol. The cutoff value of the particle size distribution according to the invention is lower than or equal to 6 times the $D_{50}$ value of the particle size distribution curve, preferably lower than or equal to 5 times the $D_{50}$ value, more preferably lower than or equal to 3 times the $D_{50}$ value and most preferably lower than or equal to 2.5 times the $D_{50}$. The cutoff value is higher than 1.01 times the $D_{50}$ value.

The sodium content of the precipitated calcium carbonate particles according to the invention is lower than or equal to 500 ppm wt, preferably lower than or equal to 250 ppm wt, more preferably lower than or equal to 100 ppm wt, still more preferably lower than or equal to 75 ppm wt, yet more preferably lower than or equal to 50 ppm wt and most preferably lower than or equal to 30 ppm wt. The sodium content is higher than or equal to 1 ppm wt. The sodium content can be measured by classical methods like Induced Coupled Plasma - Atomic Emission Spectroscopy (ICP-AES) for instance.

The calcium carbonate particles according to the invention can be coated with at least one coating agent. The coating agent can be selected from silanes, carboxylic acids, carboxylic acid salts excepted sodium salts, polyacrylic acids, polyacrylic acid salts excepted sodium salts and mixtures thereof

The carboxylic acid may be aliphatic or aromatic. Aliphatic carboxylic acids are preferred.

The aliphatic carboxylic acid may be any linear or branched or cyclic, substituted or non substituted, saturated or unsaturated, aliphatic carboxylic acid. The aliphatic carboxylic acid has usually a number of carbon atoms greater than or equal to 4, preferably greater than or equal to 8, more preferably greater than or equal to 10 and most preferably greater than or equal to 14. The aliphatic carboxylic acid has generally a number of carbon atoms lower than or equal to 32, preferably lower than or equal to 28, more preferably lower than or equal to 24 and most preferably lower than or equal to 22.

The aliphatic carboxylic acid can be selected from the group of substituted, non substituted, saturated and unsaturated fatty acids or mixtures thereof. More preferably it is selected from the group consisting of caproic acid, caprylic acid, capric acid, lauric acid, myristic acid, palmitic acid, stearic acid, iso-stearic acid, hydroxystearic acid, arachidic acid, behenic acid, lignoceric acid, cerotic acid, montanic acid, melissic acid, myristoleic acid, palmitoleic acid, petroselinic acid, petroselaidic acid, oleic acid, elaidic acid, linoleic acid, linolelaidic acid, linolenic acid, linolenelaidic acid, a-eleostaeric acid, b-eleostearic acid, gadoleic acid, arachidonic acid, erucic acid, brassidic acid and clupanodonic acid, mixtures thereof or salts derived therefrom. Mixtures containing mainly palmitic, stearic and oleic acids are more preferred. Mixtures called "stearine" which consist of about 30 - 40 wt % stearic acid, of about 40 -50 wt % palmitic acid and of about 13 - 20 wt % oleic acid are particularly preferred.

The aliphatic carboxylic acid can be a rosin acid selected from the group consisting of levopimaric acid, neoabietic acid, palustric acid, abietic acid, dehydroabietic acid, mixtures thereof or salts excepted sodium salts derived therefrom.

In case that the coating agent is a salt of an aliphatic carboxylic acid, this may be the calcium salt of the carboxylic acid. However, the coating agent may also be present e.g. in form of the potassium or ammonium salt of the aliphatic carboxylic acid.

The coating agent may be applied to the particles by any suitable method. For instance, the coating agent can be dispersed or emulsified in liquid or solid form, preferably as an emulsion with the dispersed calcium carbonate, for example, during and/or after the precipitation, the coating agent adhering to the surface of the calcium carbonate.

The calcium carbonate particles can be coated with a polyacrylic acid, a polyacrylic acid salt excepted a sodium salt or with a mixture thereof. The molecular weight of the polyacrylic acid is generally higher than or equal to 500 g/mol, preferably higher than or equal to 700 g/mol and most preferably higher than or equal to 1 000 g/mol. That molecular weight is usually lower than or equal to 15 000 g/mol, ideally lower than or equal to 4 000 g/mol and in particular lower than or equal to 2 000 g/mol.

In case that the coating agent is a salt of a polyacrylic acid, this may be the calcium salt of the polyacrylic acid. However, the coating agent may also be present e.g. in form of the potassium or ammonium salt of the polyacrylic acid.

Preferably, the calcium carbonate particles used in the invention are coated with a coating agent the content of which being generally higher than or equal to 0.0001 wt %, often higher than or equal to 0.001 wt %, frequently higher than or equal to 0.01 wt % and specifically higher than or equal to 0.05 wt %, based on the total weight of the particles. The coating content of the particles according to the invention is generally lower than or equal to 60 wt %, often lower than or equal to 25 wt %, frequently lower than or equal to 10 wt % and specifically lower than or equal to 6 wt %, based on the total weight of the particles.

It has surprisingly been found that the calcium carbonate particles according to the invention can be obtained by a hydrothermal treatment of precipitated calcium carbonate particles in the absence of sodium or in the presence of such a quantity that the obtained particles have a sodium content lower than or equal to 500 ppm by weight.

The particles of precipitated calcium carbonate can be prepared by using various sources of calcium and carbonates ions.

Particles of precipitated calcium carbonate may be manufactured by first preparing a calcium oxide (quick lime) by subjecting limestone to calcination by burning a fuel, such as coke, a petroleum fuel (such as heavy or light oil), natural gas, petroleum gas (LPG) or the like, and then mixing the calcium oxide with water to produce a calcium hydroxide slurry (milk or lime), and reacting the calcium hydroxide slurry with carbon dioxide to obtain the precipitated calcium carbonate particles (carbonation process). Carbon dioxide containing gas can be discharged from a calcination furnace for obtaining the calcium oxide from limestone, from gases from power plants or from liquid $CO_2$ containers for instance. It is preferred to use carbon dioxide containing gas discharged from a calcination furnace for obtaining the calcium oxide from limestone.

Precipitation of calcium carbonate can also be carried out by adding a metal or a non metal carbonate reacting with lime water or by the addition of a metal or a non metal carbonate reacting with solutions containing calcium chloride. The metal carbonate is not a sodium carbonate.

Precipitated calcium carbonate particles obtained from the carbonation process are preferred. The invention also relates to a process for making the precipitated calcium carbonate particles according to the invention.

According to a first embodiment, the process for making the precipitated calcium carbonate particles according to the invention comprises the steps of :

(a) Mixing a solution or suspension containing at least one calcium ion source with at least one carbonate ion source
(b) Precipitating calcium carbonate particles from the mixture obtained in step (a), in order to form a suspension of precipitated calcium carbonate particles
(c) Optionally cooling the suspension obtained in step (b)
(d) Heating up the precipitated calcium carbonate particles suspension obtained from step (b) or step (c) to a final temperature higher than or equal to 60 °C and lower than or equal to 200 °C.
(e) Maintaining the precipitated calcium carbonate particles suspension obtained in step (d) at the final temperature for a sufficient time to cause the particles to grow.
(f) Cooling the suspension of precipitated calcium carbonate particles obtained in step (e)
(g) Collecting the particles of precipitated calcium carbonate from the suspension obtained in the preceding step.

According to a second embodiment, the process for making the precipitated calcium carbonate particles according to the invention comprises the steps (a) to (g) of the first embodiment with the following step (h) carried out after step (b) or step (c) and before step (d):

(h) Adding to the suspension obtained in step (b) or step (c) calcium carbonate particles with a mean crystallite size lower than the mean crystallite size of the particles obtained in step (b) or step (c)

According to a third embodiment, the process for making the precipitated calcium carbonate particles according to the invention comprises the steps (a) to

(g) of the first embodiment with the following steps (i), (k) and (1) or (j), (k) and
(1) carried out after step (e) or step (f) and before step (g) :
(i) adding a carbon dioxide containing gas and at least one hydroxide of a metal which is not sodium or a non-metal to the precipitated calcium carbonate particles suspension obtained in step (e) or step (f) to maintain the pH from 10 to 13
(j) adding to the suspension obtained in step (e) or step (f) calcium carbonate particles with a mean crystallite size lower than the mean crystallite size of the particles obtained in step (e) or step (f).
(k) repeating respectively steps (e) to (f) or steps (d) to (f)
(1) optionally repeating at least once steps (i), (k) and (1) or steps (j), (k) and (1).

According to a fourth embodiment, the particles obtained after the last step (f) of the first three embodiments can be coated by :

(m) adding a coating agent to the suspensions obtained in step (f) and coating the particles with the coating agent.

The process is carried out in the absence of sodium or in the presence of such a low quantity of sodium that the obtained particles have a sodium content lower than or equal to 500 ppm by weight.
Additional embodiments can be obtained by any combination of step (h) of the second embodiment and of steps (i) to (1) of the third embodiment.
The process wherein the suspension of step (a) is a calcium hydroxide suspension (milk of lime) and the source of carbonate ion is a carbon dioxide containing gas is preferred.
The concentration of the milk of lime (MoL) is usually higher than or equal to 50 g of $Ca(OH)_2$/L of MoL, often higher than or equal to 100 g/L, frequently higher than or equal to 150 g/L and more specifically higher than or equal to 200 g/L. That concentration is generally lower than or equal to 500 g of $Ca(OH)_2$/L of MoL, usually lower than or equal to 400 g/L, frequently lower than or equal to 300 g/L and often lower than or equal to 250 g/L.
When the carbon dioxide-containing gas is discharged from calcinations furnace or from power plants, its carbon dioxide content is usually higher than or equal to 1 % vol of the gas, preferably higher than or equal to 2 % vol, more preferably higher than or equal to 5 % vol and most preferably higher than or equal to 10 % vol. That content is generally lower than or equal to 60 % vol, advantageously lower than or equal to 45 % vol, more advantageously lower than or equal to 40 % vol and most advantageously lower than or equal to 30 % vol. The balance can be made of any other gases like for instance oxygen, nitrogen, and water vapor.
When the carbon dioxide-containing gas is discharged from liquid $CO_2$ containers, its carbon dioxide content is usually higher than or equal to 1 % vol of the gas, preferably higher than or equal to 15 % vol, more preferably higher than or equal to 30 % vol and most preferably higher than or equal to 50 % vol.
The rate of addition of the carbon dioxide-containing gas to the milk of lime in Normal liter of $CO_2$ per hour and per kg $Ca(OH)_2$ is usually higher than or equal to 50, preferably higher than or equal to 100, more preferably higher than or equal to 150 and most preferably higher than or equal to 250. That rate of addition is generally lower than or equal to 2500 Normal liter of $CO_2$ per hour and per kg $Ca(OH)_2$, advantageously lower than or equal to 2000, more advantageously lower than or equal to 1750 and most advantageously lower than or equal to 1500.
The temperature of the carbonation reaction is higher than or equal to 1 °C, preferably higher than or equal to 5 °C, more preferably higher than or equal to 10 °C and most preferably higher than or equal to 12 °C. That temperature is lower than or equal to 90 °C, advantageously lower than or equal to 85 °C, more advantageously lower than or equal to 75 °C and most advantageously lower than or equal to 70 °C.
The pressure of the carbonation reaction is generally higher than or equal to 1 bar absolute, often higher than or equal to 2 bar absolute, frequently higher than or equal to 3 bar absolute and specifically higher than or equal to 4.5 bar absolute. That pressure is generally lower than or equal to 10 bar absolute, often lower than or equal to 7 bar absolute, frequently lower than or equal to 6 bar absolute and specifically lower than or equal to 5 bar absolute.
The carbonation reaction can be carried out batchwise or continuously. It is preferred to carry out the carbonation reaction batchwise.

The extent of the precipitation reaction (step (b)) can be measured by known methods in the art like for instance, conductivity, pH measurements and infra red spectroscopy.

The calcium carbonate particles optionally added in step (h) or step (j) have a mean primary particle size (dp) lower than or equal to 0.5 times the mean primary particle size (dp) of the precipitated calcium carbonate particles after step (b) or (c) or after step (e) or (f), preferably lower than or equal to 0.33 times and most preferably lower than or equal to 0.16 times.

The weight ratio between the calcium carbonate particles optionally added at step (h) and the precipitated calcium carbonate particles obtained after step (b) or step (c) is usually higher than or equal to 5 % wt/wt, preferably higher than or equal to 30 % wt/wt, more preferably higher than or equal to 40 % wt/wt and most preferably higher than or equal to 50 % wt/wt. That ratio is generally lower than or equal to 250 % wt/wt, advantageously lower than or equal to 200 % wt/wt, advantageously lower than or equal to 150 % wt/wt and most advantageously lower than or equal to 100 % wt/wt.

The temperature of steps (d) and (e) is usually higher than or equal to 60 °C, preferably higher than or equal to 90 °C, more preferably higher than or equal to 110 °C and most preferably higher than or equal to 130 °C. That temperature is generally lower than or equal to 200 °C, advantageously lower than or equal to 180 °C, advantageously lower than or equal to 160 °C and most advantageously lower than or equal to 150 °C.

The pressure of steps (d) and (e) is usually higher than or equal to 1 bar absolute, preferably higher than or equal to 2 bar absolute, more preferably higher than or equal to 3 bar absolute and most preferably higher than or equal to 4 bar absolute. That pressure is generally lower than or equal to 15 bar absolute, advantageously lower than or equal to 12 bar absolute, advantageously lower than or equal to 8 bar absolute and most advantageously lower than or equal to 6 bar absolute.

Steps (d) and (e) can be carried out batchwise or continuously. It is preferred to carry out those steps batchwise.

The duration of step (e) will depend on the required size ($D_{50}$) of the precipitated calcium carbonate particles. Without being bound by any theory, it is believed that during that step, growth of big precipitated calcium carbonate particles occurs at the expense of small precipitated calcium carbonate particles. The particle size distribution of the particles during ageing can be measured by sampling the precipitated calcium carbonate particles suspension and submitting the sample to laser light scattering analysis.

The duration of step (e) is usually higher than or equal to 0.5 h, preferably higher than or equal to 2 h, more preferably higher than or equal to 3 h and most preferably higher than or equal to 4 h. That duration is generally lower than or equal to 100 h, advantageously lower than or equal to 75 h, advantageously lower than or equal to 50 h and most advantageously lower than or equal to 20 h.

The hydroxide of step (i) can be any hydroxide excepted sodium hydroxide. That hydroxide can be an inorganic or an organic hydroxide. Inorganic hydroxides are preferred. Alkaline and alkaline-earth hydroxides are more preferred. Potassium and ammonium hydroxides are most preferred. The hydroxides can be added to the precipitated calcium carbonate particles suspension in solid, liquid or gas form. It is preferred to add them in liquid form. It is more preferred to add them as aqueous solutions.

The content of the hydroxide in the precipitated calcium carbonate particles suspension obtained in step (i) is usually higher than or equal to 2.5 g/L of the precipitated calcium carbonate particles suspension, preferably higher than or equal to 10 g/L, more preferably higher than or equal to 20 g/L and most preferably higher than or equal to 30 g/L. That content is generally lower than or equal to 100 g/L, advantageously lower than or equal to 70 g/L, advantageously lower than or equal to 50 g/L and most advantageously lower than or equal to 40 g/L.

The pH of the precipitated calcium carbonate particles suspension after addition of the hydroxide (step (i)) is higher than or equal to 10, preferably higher than or equal to 10.5, more preferably higher than or equal to 11 and most preferably higher than or equal to 11.5. That pH is lower than or equal to 13, advantageously lower than or equal to 12.5 and most advantageously lower than or equal to 12.

The collection of the particles of precipitated calcium carbonate obtained in steps (g) or (m) can be carried out by many ways, for example, by filtration, by centrifugation and by spray-drying.

In a first preferred embodiment according to the invention well adapted to produce calcium carbonate particles with a $D_{50}$ lower than or equal to 0.3 μm, calcium carbonate is first precipitated by carbonation of milk of lime to obtain a precipitated calcium carbonate particles suspension. The temperature of the precipitated calcium carbonate particles suspension is then raised and maintained for a sufficient time to cause the particles to grow to their fmal size. The precipitated calcium carbonate particles suspension is then cooled down and the precipitated calcium carbonate particles are recovered by filtration. The carbonation reaction is carried out in the absence of any added sodium compound or in the presence of such a quantity of sodium that the obtained particles have a sodium content lower than or equal to 500 ppm by weight.

In a second preferred embodiment according to the invention well adapted to produce calcium carbonate particles with a $D_{50}$ higher than 0.3 μm and lower than or equal to 2.0 μm, calcium carbonate is first precipitated by carbonation of milk of lime to obtain a precipitated calcium carbonate particles suspension. The temperature of the precipitated calcium carbonate particles suspension is then raised and maintained for a sufficient time to cause the particles to grow. The cooled suspension of precipitated calcium carbonate particles is then first saturated with a carbon dioxide containing gas. Potassium or ammonium hydroxide is then added to raise the pH of the precipitated calcium carbonate particles suspension. The temperature of the precipitated calcium carbonate particles suspension is then raised and maintained for a sufficient time to cause the particles to grow to their fmal size. The precipitated calcium carbonate particles suspension is then cooled down and the precipitated calcium carbonate particles are recovered by filtration. The whole process is carried out in the absence of any added sodium compound or in the presence of such a quantity of sodium that the obtained particles have a sodium content lower than or equal to 500 ppm by weight.

In a third preferred embodiment according to the invention well adapted to produce calcium carbonate particles with a $D_{50}$ higher than 2.0 $\mu$m, calcium carbonate is first precipitated by carbonation of milk of lime to obtain a precipitated calcium carbonate particles suspension. Calcium carbonate particles with a low size are then added to precipitated calcium carbonate particles suspension and the temperature of the precipitated calcium carbonate particles suspension is then raised and maintained for a sufficient time to cause the particles to grow. This operation can be repeated at least one time. The precipitated calcium carbonate particles suspension is then cooled down and the precipitated calcium carbonate particles are recovered by filtration. The whole process is carried out in the absence of any added sodium compound or in the presence of such a quantity of sodium that the obtained particles have a sodium content lower than or equal to 500 ppm by weight.

The invention also relates to the use of the precipitated calcium carbonate particles as fillers in polymer, rubber, inks, plastisols, sealants, paint, coatings, varnishes, paper, pharmaceuticals, food and construction materials.

The polymers can be of any type. Polyester polymers are preferred.

The polymers containing the filler can be processed under various forms like sheets, films, coatings and pipes, for instance. Polymer films are preferred.

Polymer film thickness is generally higher than or equal to 0.1 $\mu$m, often higher than or equal to 1 $\mu$m, frequently higher than or equal to 100 $\mu$m and speicfically higher than or equal to 500 $\mu$m. That thickness is generally lower than or equal to 2000 $\mu$m, often lower than or equal to 1000 $\mu$m.

Polymer films containing the filler can be used in several fields like packaging, electronics, membranes, hygienic acticles. It is preferred to add the filler to films employed in electronics like capacitors, digital stencils and thermal transfer media.

The following examples further illustrate the invention but are not to be construed as limiting its scope.

The particle size distribution has been recorded according to the following procedure.

A Horiba Laser scattering particle size distribution analyzer LA 910 has been used. The instrument is filled with ~ 250 ml of ethyleneglycol. The precipitated calcium carbonate sample has been added slowly until the software provided with the instrument indicates that the concentration is suitable for the measurement. A few mg of precipitated calcium carbonate are normally sufficient. The ethyleneglycol precipitated calcium carbonate suspension is then pumped through the instrument for 5 min, at a pump rate of 4, at an agitation rate of 3 and with the Ultrasonic on. The measurement is carried out after this 5 min of pumping.

Example 1 (according to the invention)

Precipitation of calcium carbonate particles

An open, stirred reactor has been filled with 5 L of milk of lime. The concentration of $Ca(OH)_2$ in the milk of lime was 200 g/L. The temperature of the reactor has been adjusted to 18°C. A carbon dioxide-air mixture has been introduced into the milk of lime. The volume flows were 500 L of $CO_2$/h and 750 L of air/h. The pH dropped after 95 min from about 12 to about 6. The gas introduction has been continued for further 15 min. A precipitated calcium carbonate particles suspension has been obtained.

Hydrothermal treatment

3 liters of that suspension have been heated in an stirred autoclave at a temperature of 114 °C and at a pressure of 1.9 bar absolute for 150 min. The autoclave has been cooled down to 75°C.

Coating procedure

1035 g water have been heated to 75°C, 157.5 g of stearic acid and 60 mL of an aqueous ammonia solution (25 % by weight) have been added to the water. The resulting mixture has been stirred for 1 hour at 75 °C and an emulsion was obtained.

487 g of the emulsion have been added to the precipitated calcium carbonate particles hot suspension. The resulting mixture has been stirred for 1 hour at 75 °C. The suspension has been filtrated. The filter cake has been dried at 105 °C and under a pressure of 1 bar for 16 h.

The crystal morphology, the $D_{50}$, $D_{99.5}$, Na content, $d_P$, SPAN and $S_{BET}$ values are presented in Table 1.

Example 2 (according to the invention)

Precipitation of calcium carbonate particles

The precipitation procedure of example 1 has been followed.

Hydrothermal treatment

The procedure of example 1 has been followed except that the autoclave has been cooled down to 25 °C.

The suspension has been further saturated with a carbon dioxide-air mixture carbon dioxide (same mixture as for precipitation) and 18 g of solid KOH have been added. A pH of 11.5 was recorded. The autoclave has been heated to 115°C, at a pressure of 1.9 bar absolute for 17 h. The autoclave has been cooled down to room temperature and the suspension has been filtrated. The filter cake has been dried at 105 °C and under a pressure of 1 bar absolute for 16 h.

The crystal morphology, the $D_{50}$, $D_{99.5}$, Na content, $d_P$, SPAN and $S_{BET}$ contents values are presented in Table 1.

Example 3 (according to the invention)

Precipitation of calcium carbonate particles

An open stirred reactor has been filled with 5 L of milk of lime. The concentration of $Ca(OH)_2$ in the milk of lime was 200 g/L. The temperature of the reactor has been adjusted to 24°C. A carbon dioxide-air mixture has been introduced into the milk of lime. The volume flows were 250 L of $CO_2$/h and 380 L of air/h. The pH dropped after 250 min from about 12 to about 6. The gas introduction has been continued for further 15 min. A precipitated calcium carbonate particles suspension has been obtained. The dp value of the precipitated calcium carbonate particles was 0.2 μm.

Hydrothermal treatment

The precipitated calcium carbonate particles suspension has been introduced into a stirred autoclave. 250 g of precipitated calcium carbonate particles with a dp value of 0.08 μm have been added to the suspension. The autoclave has been heated to 115°C at a pressure of 1.9 bar absolute for 24 h. The autoclave has been cooled down to room temperature.

The crystal morphology, the $D_{50}$, $D_{99.5}$, Na content, $d_P$, SPAN and $S_{BET}$ contents values are presented in Table 1.

Example 4 (not according to the invention)

Precipitation of calcium carbonate particles

The precipitation procedure of example 3 has been followed.
No hydrothermal treatment has been carried out.

The crystal morphology, the $D_{50}$, $D_{99.5}$, $D_{99.5}/D_{50}$, Na content, $d_P$, SPAN and $S_{BET}$ contents values are presented in Table 1.

Example 5 (not according to the invention)

Precipitation of calcium carbonate particles

The precipitation procedure of example 1 has been followed except that the temperature was 16 °C.

Hydrothermal treatment

The procedure of example 1 has been followed except that the autoclave has been cooled down to 25 °C.

The suspension has been further saturated with a carbon dioxide-air mixture carbon dioxide (same mixture as for precipitation carbon dioxide) and 12 g of solid NaOH have been added. A pH of 11.3 was recorded. The autoclave has heated to 115°C, at a pressure of 1.9 bar absolute for 17 h. The autoclave has been cooled down to room temperature and the suspension has been filtrated. The filter cake has been dried at 105 °C and under a pressure of 1 bar for 16 h.

The crystal morphology, the $D_{50}$, $D_{99.5}$, Na content, $d_P$, SPAN and $S_{BET}$ contents values are presented in Table 1.

Table 1

| Example | Crystal morphology | Aspect ratio | $D_{50}$ ($\mu$m) | $D_{99.5}$ ($\mu$m) | Na (ppm wt) | $d_P$ ($\mu$m) | SPAN | $S_{BET}$ ($m^2$/g) |
|---|---|---|---|---|---|---|---|---|
| 1 | rhombohedral | 1.3 | 0.241 | 0.462 | 29 | 0.130 | 0.757 | 13.1 |
| 2 | rhombohedral | 1.2 | 1.134 | 5.900 | 24 | 0.400 | 2.255 | 4.3 |
| 3 | rhombohedral | 1.2 | 2.051 | 11.56 | 26 | 0.540 | 2.550 | 4.0 |
| 4 | scalenohedral | 2.9 | 0.872 | 8.816 | 27 | 0.200 | 4.318 | 10.0 |
| 5 | rhombohedral | 1.2 | 0.272 | 0.655 | 718 | 0.120 | 0.865 | 13.9 |
| n.m. : not measured | | | | | | | | |

## Claims

1. Particles of precipitated calcium carbonate having (a) a rhombohedral crystal morphology, (b) a particle size distribution measured by laser light scattering such that at least 99.5 % by volume of the particles have an equivalent spherical diameter lower than or equal to 6 times the average equivalent spherical diameter ($D_{50}$), and (c) a sodium content lower than or equal to 500 ppm by weight.

2. Particles according to claim 1 having a calcite content higher than or equal to 30 % by weight and where the particles comprise crystallites having an aspect ratio higher than 1 and lower than or equal to 5.

3. Particles according to any of claims 1 to 2 having a BET specific surface area greater than or equal to 0.1 $m^2$/g and lower than or equal to 30 $m^2$/g.

4. Particles according to any of claims 1 to 3 having an average equivalent spherical diameter ($D_{50}$) greater than or equal to 0.03 $\mu$m and lower than or equal to 20 $\mu$m and having a particle size distribution with a SPAN value greater than or equal to 0.05 and lower than or equal to 3.5, as measured by laser light scattering.

5. Particles of any of claims 1 to 4 coated with at least one coating agent.

6. Particles according to claim 5 where the coating agent is selected from carboxylic acids, carboxylic acid salts excepted sodium salts, polyacrylic acids, polyacrylic acid salts excepted sodium salts, silanes and mixtures thereof.

7. Process for preparing the particles according to any of claims 1 to 6 comprising the steps of

    (a) Mixing a solution or suspension containing at least one calcium ion source with at least one carbonate ion source
    (b) Precipitating calcium carbonate particles from the mixture obtained in step (a), in order to form a suspension of precipitated calcium carbonate particles
    (c) Optionally cooling the suspension obtained in step (b)
    (d) Heating up the precipitated calcium carbonate particles suspension obtained from step (b) or step (c) to a final temperature higher than or equal to 60 °C and lower than or equal to 200 °C
    (e) Maintaining the precipitated calcium carbonate particles suspension obtained in step (d) at the final temperature for a sufficient time to cause the particles to grow
    (f) Cooling the suspension of precipitated calcium carbonate particles obtained in step (e)
    (g) Collecting the particles of precipitated calcium carbonate obtained in the preceding step

    and wherein the process is carried out in the absence of sodium or in the presence of such a low quantity that the obtained particles have a sodium content lower than or equal to 500 ppm by weight.

8. Process according to claim 7 comprising the steps (a) to (g) and the following step (h) carried out after step (b) or step (c) and before step (d) :

(h) adding to the suspension obtained in step (b) or step (c) calcium carbonate particles with a mean crystallite size lower than the mean crystallite size of the particles obtained in step (b) or step (c).

9. Process according to claims 7 or 8 comprising steps (i), (k) and (l) or (j), (k) and (l) carried out after step (e) or step (f) and before step (g) :

(i) adding a carbon dioxide containing gas and at least one hydroxide of a metal which is not sodium or a non-metal to the precipitated calcium carbonate particles suspension from step (e) or step (f) to maintain the pH from 10 to 13
(j) adding to the suspension obtained in step (e) or step (f) calcium carbonate particles with a mean crystallite size lower than the mean crystallite size of the particles obtained in step (e) or step (f).
(k) repeating respectively steps (e) to (f) or steps (d) to (f)
(1) optionally repeating at least once steps (i), (k) and (l) or steps (j), (k) and (l).

10. Process according to any of claims 7 to 9 comprising the following step carried out between step (f) and step (g)

(m) adding a coating agent to the suspensions obtained in step (f) and coating the particles with the coating agent.

11. Process according to any of claims 7 to 10 wherein the calcium ion source used in step (a) is calcium hydroxide and the carbonate ion source used in step (a) is a carbon dioxide containing gas.

12. Process according to claims 9 or 10 wherein the hydroxide of step (i) is potassium hydroxide or ammonium hydroxide.

13. Use of particles according to any of claims 1 to 6 as a filler in polymers, rubbers, inks, plastisols, sealants, paints, coatings, varnishes, paper, pharmaceuticals, food and construction materials.

14. Use of particles according to claim 13 in polymers films.

**European Patent**
**Office**

**EUROPEAN SEARCH REPORT**

Application Number

EP 05 11 1943

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| D,X | EP 0 703 193 A (MINERALS TECHNOLOGIES INC) 27 March 1996 (1996-03-27) * the whole document * ----- | 1-14 | INV. C01F11/18 C09C1/02 C08K3/26 |
| D,X | EP 0 447 094 A (PFIZER INC; MINERALS TECHNOLOGIES INC) 18 September 1991 (1991-09-18) * the whole document * ----- | 1-14 | |
| A | EP 1 081 197 A (MINERALS TECHNOLOGIES INC) 7 March 2001 (2001-03-07) * paragraphs [0013], [0019] - [0025] * ----- | | |

| | | | TECHNICAL FIELDS SEARCHED (IPC) |
|---|---|---|---|
| | | | C01F C09C C08K |

The present search report has been drawn up for all claims

| Place of search | Date of completion of the search | Examiner |
|---|---|---|
| Munich | 27 April 2006 | Rhodes, K |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 05 11 1943

This annex lists the patent family members relating to the patent documents cited in the above-mentioned European search report.
The members are as contained in the European Patent Office EDP file on
The European Patent Office is in no way liable for these particulars which are merely given for the purpose of information.

27-04-2006

| Patent document cited in search report | | Publication date | Patent family member(s) | | Publication date |
|---|---|---|---|---|---|
| EP 0703193 | A | 27-03-1996 | EP | 0703315 A2 | 27-03-1996 |
| EP 0447094 | A | 18-09-1991 | AU | 666539 B2 | 15-02-1996 |
| | | | AU | 3870093 A | 05-08-1993 |
| | | | AU | 7283891 A | 10-10-1991 |
| | | | BR | 9100979 A | 05-11-1991 |
| | | | CA | 2038009 A1 | 14-09-1991 |
| | | | DE | 69122146 D1 | 24-10-1996 |
| | | | DE | 69122146 T2 | 03-04-1997 |
| | | | DE | 69128730 D1 | 19-02-1998 |
| | | | DE | 69128730 T2 | 16-07-1998 |
| | | | DE | 69129377 D1 | 10-06-1998 |
| | | | DE | 69129377 T2 | 19-11-1998 |
| | | | ES | 2092545 T3 | 01-12-1996 |
| | | | ES | 2117823 T3 | 16-08-1998 |
| | | | ES | 2112602 T3 | 01-04-1998 |
| | | | FI | 911211 A | 14-09-1991 |
| | | | JP | 3417954 B2 | 16-06-2003 |
| | | | JP | 5319816 A | 03-12-1993 |
| | | | KR | 9301214 B1 | 22-02-1993 |
| | | | US | 5269818 A | 14-12-1993 |
| | | | US | 5296002 A | 22-03-1994 |
| | | | US | 5215734 A | 01-06-1993 |
| EP 1081197 | A | 07-03-2001 | NONE | | |

EPO FORM P0459

For more details about this annex : see Official Journal of the European Patent Office, No. 12/82

**EP 1 795 502 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 703193 A